# EUROPEAN PATENT APPLICATION

(11) **EP 1 569 364 A2**
(43) Date of publication of application: **31.08.2005**
(21) Application number: 05251112.8
(22) Date of filing: 24.02.2005
(51) Int. Cl.: H04B 7/185

(54) **An information distribution system and method and radio base station**

(30) Priority: 25.02.2004 JP 2004050179
(71) Applicant: NTT DoCoMo, Inc., Tokyo 100-6150 (JP)
(72) Inventor: Kawakami, Hiroshi, c/o IPD NTT DoCoMo Inc., Chiyoda-ku, Tokyo 100-6150 (JP)
(74) Representative: Maury, Richard Philip

(57) **Abstract**

An information distribution system (100) for distributing information to a mobile terminal (108) via a radio base station (102) is disclosed. The radio base station (102) in the system comprises: a receiving unit (304) for receiving a radio signal including the distributed information from a communication satellite (112) or a ground wave transmission station (202); a converting unit (306) for converting a signal format of the received radio signal; an administration unit (310) for administering a distribution request received from the mobile terminal; and a transmitting unit (308) for transmitting the converted signal to the mobile terminal according to an instruction from the administration unit.

## Description

### BACKGROUND OF THE INVENTION

The present invention generally relates to information distribution systems and methods, and more specifically relates to an information distribution system and method for efficiently distributing the same information to multiple users.

In this technical field, it is expected that information distribution services transmitting the same information to many mobile terminals will be more and more important. Such services include TV broadcasting service, radio broadcasting service, advertisement and other information notice services utilizing E-mail systems, audio visual streaming distribution using the Internet, and so on.

It is necessary for service providers (broadcasters) and service receivers of such services to prepare for proper communication. When preparing for such communication, it should be taken into consideration that communication system is analog or digital, and uses satellite wave or ground wave, etc. The service receivers should consider whether they should be equipped with functions for receiving satellite signals.

In order for mobile terminals to receive distribution data or broadcasting contents from the service providers, there are two ways for receiving such data or contents. One way is that the mobile terminals receive such data or contents via a ground network. Another way is that the mobile terminals with functions for receiving satellite signals and the data or contents are transmitted through a satellite to the mobile terminals. The network transmission way can be further divided to a unicasting method, a broadcasting method (see Non-patent Document #1, for example), and multi-casting method (see Non-patent Document #2).

### [Non-patent Document #1]

C. Horning, "A Standard for the Transmission of IP Datagrams over Ethernet Networks", RFC894, IETF, April 1984

### [Non-patent Document #2]

S. Deering "Host Extensions for IP Multicasting", RFC1112, IETF, Aug. 1989

In the manner that the mobile terminals have functions for receiving satellite signals, the mobile terminal need to be equipped a dedicated receiving device depending on analog method or digital method. And therefore, this manner makes it difficult to miniaturize mobile terminals.

In the unicasting manner, each piece of information is individually transmitted to each of mobile terminals with one-to-one communication. In this unicasting manner, an amount of traffic increases significantly as the mobile terminals increase, requiring a lot of network resource.

In the broadcasting manner, information is transmitted to unspecified many mobile terminals. In this broadcasting manner, information distribution efficiency is not high since all information are transmitted to all mobile terminals irrespective of mobile terminals' needs to receive.

In the multicasting manner, information is transmitted to specific multi mobile terminals. In the multicasting manner, networks need to be equipped with routers for multicasting to administer distribution trees (creation and revision). Whenever mobile terminals move, the distribution trees should be re-created, resulting in increased workload on the networks.

In the manner using a communication satellite, mobile terminals should be equipped with a special device for receiving data from the communication satellite. The mobile terminals should be located in line of site from the satellite. This manner increases cost for transmitting information due to dedicated lines between the satellite and a ground station. Further, if this system allows that the mobile terminals request for re-sending information after detecting errors, radio resource is unnecessarily consumed.

### SUMMARY OF THE INVENTION

A general object of the present invention is to provide an information distribution system and method and a radio base station used in the system, in which the same information is effectively transmitted to plural mobile terminals with solving at least one of the above problem.

The above object of the present invention is achieved by an information distribution system (100) for distributing information to a mobile terminal (108) via a radio base station (102), characterized in that the radio base station (102) comprises: a receiving unit (304) for receiving a radio signal including the distributed information from a communication satellite (112) or a ground wave transmission station (202); a converting unit (306) for converting a signal format of the received radio signal; an administration unit (310) for administering a distribution request received from the mobile terminal; and a transmitting unit (308) for transmitting the converted signal to the mobile terminal according to an instruction from the administration unit.

According to another feature of the present invention, an information distribution system (100) for distributing information to a mobile terminal (108) via a radio base station (102) is provided. The system is characterized in that the radio base station (102) comprises: a receiving unit (304) for receiving a radio signal including the distributed information from a communication satellite (112); a converting unit (306) for converting a signal format of the received radio signal; an administration unit (310) for administering a distribution request received from the mobile terminal; and a transmitting unit (308) for transmitting the converted signal to the mobile terminal according to an instruction from the administration unit; and the information distribution system comprises a transmission station for satellite communication (504) for receiving information from an information terminal (110) and transmitting the information to the communication satellite (112).

According to another feature of the present invention, the information distribution system is characterized in that the transmission station for satellite communication (602) is capable of communicating with each of a plurality of radio base stations via a network (604) excluding the communication satellite (112); and the radio base stations comprise a detecting unit for detecting an error included the received signal from the communication satellite; and a requesting unit for requesting the transmission station for satellite communication (504) to re-send the information.

According to another feature of the present invention, the information distribution system is characterized in that the transmission station for satellite communication (602) is capable of communicating with each of a plurality of radio base stations via a network (604) excluding the communication satellite (112); and the mobile terminal (108) comprises a detecting unit for detecting an error included the received signal from the radio base stations; and a requesting unit for requesting the transmission station for satellite communication (504) via the radio base station to re-send the information.

According to another feature of the present invention, a radio base station (102) is provided. The radio base station comprises a receiving unit (304) for receiving a radio signal including the distributed information from a communication satellite (112) or a ground wave transmission station (202); a converting unit (306) for converting a signal format of the received radio signal; an administration unit (310) for administering a distribution request received from the mobile terminal; and a transmitting unit (308) for transmitting the converted signal to the mobile terminal according to an instruction from the administration unit.

According to another feature of the present invention, a radio base station (102) is provided, which comprises: a receiving unit (304) for receiving a radio signal including the distributed information from a communication satellite (112); a converting unit (306) for converting a signal format of the received radio signal; an administration unit (310) for administering a distribution request received from the mobile terminal; and a transmitting unit (308) for transmitting the converted signal to the mobile terminal according to an instruction from the administration unit; and the distributed information is distributed from a ground transmission station for satellite communication (504) to the communication satellite (112).

According to another feature of the present invention, the radio base station is characterized in that the transmission station for satellite communication (602) is capable of communicating with each of a plurality of radio base stations via a network (604) excluding the communication satellite (112); and the radio base station (102) comprises a detecting unit for detecting an error included the received signal from the communication satellite; and a requesting unit for requesting the transmission station for satellite communication (504) to re-send the information.

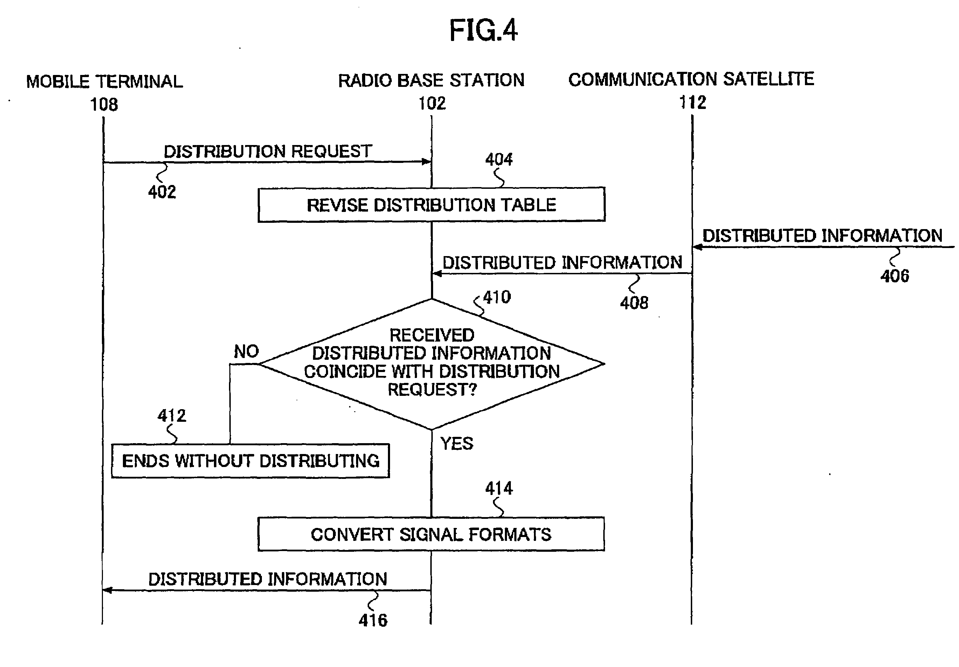

According to another feature of the present invention, an information distribution method (Fig. 4) for distributing information to a mobile terminal (108) via a radio base station (102) is provided, which is characterized by the steps of: a step of receiving a distribution request from the mobile terminal (108); a step of receiving a radio signal including the distributed information from a communication satellite (112) or a ground wave transmission station (202); a step of comparing the distributed information with contents of the distribution request; a step of converting a signal format of the received radio signal depending on the comparison result; and a step of transmitting the converted signal to the mobile terminal according to the distribution request.

According to another feature of the present invention, an information distribution method (Fig. 4) for distributing information to a mobile terminal (108) via a radio base station (102) is provided, which is characterized by the steps of: a step of receiving a distribution request from the mobile terminal (108); a step of transmitting a signal including the distributed information from a transmission station for satellite communication (504) to a communication satellite (112); a step of receiving the signal from the communication satellite (112); a step of comparing the distributed information with contents of the distribution request; a step of converting a signal format of the received radio signal depending on the comparison result; and a step of transmitting the converted signal to the mobile terminal according to the distribution request.

According to another feature of the present invention, the information distribution method is characterized in that the transmission station for satellite communication (602) is capable of communicating with each of a plurality of radio base stations via a network (604) excluding the communication satellite (112); and the method further comprises a step of detecting an error included the received signal from the communication satellite; and a step of requesting the transmission station for satellite communication (504) to re-send the information.

According to embodiments of the present invention, an information distribution system and method and a radio base station used in the system are realized in which the same information can be efficiently distributed to multiple users.

### BRIEF DESCRIPTION OF THE DRAWINGS

Fig. 1 schematically shows an information distribution system according to a first embodiment of the present invention;
Fig. 2 schematically shows that information is distributed from a communication satellite and/or a ground wave transmission station;
Fig. 3 is a block diagram of the radio base station shown in Fig. 1;
Fig. 4 is a flowchart illustrating a procedure in the first embodiment of the present invention;
Fig. 5 schematically shows an information distribution system according to a second embodiment of the present invention;
Fig. 6 schematically shows an information distribution system according to a third embodiment of the present invention;
Fig. 7 is a flowchart illustrating a procedure in the third embodiment of the present invention;
Fig. 8 schematically shows an information distribution system according to an alternative embodiment of the third embodiment of the present invention; and
Fig. 9 shows a distribution table according to the first embodiment of the present invention.

### DESCRIPTION OF THE PREFERRED EMBODIMENTS

The following is a description of embodiments of the present invention, with reference to the accompanying drawings.

Throughout all the figures, members and parts having the same functions are assigned the same or similar reference numerals.

### [First Embodiment]

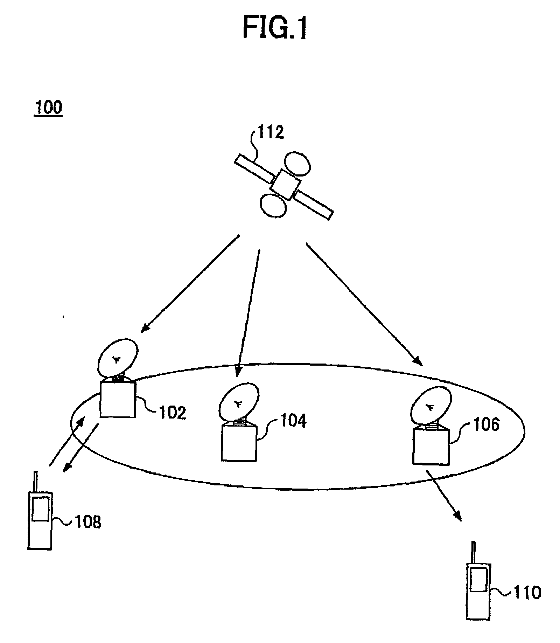

Fig. 1 generally shows an information distribution system 100 according to a first embodiment of the present invention. The information distribution system 100 comprises a plurality of radio base stations 102, 104 and 106 provided in a service area and mobile terminals 108 and 110, and a communication satellite 112.

The communication satellite (or broadcasting satellite) 112 receives distributed information from a ground transmission station (not shown) and transmits it into the service area. The distributed information includes a variety of contents, such as general broadcasting service contents provided by TV broadcasting or radio broadcasting service companies, and special broadcasting service contents provided by service companies having no broadcasting facility.

The mobile terminals 108, 110 are devices that finally receive the distributed information.

The mobile terminals may be cellular phones, mobile communication terminal, communicable personal computers and any other communicable terminals. The mobile terminals 108, 110 can communicate within a cell of the communication system. When the mobile terminals move over the border of the cell, they can continue to communicate by performing hand-over.

The radio base stations 102, 104, 106 are provided within cells of the communication system respectively, and communicate with the mobile terminals 108, 110. These radio base stations have functions as cellular system base stations establishing service areas in plural cells. The radio base stations 102, 104, 106 in this embodiment can further receive radio signal from the communication satellite 112, convert the signal and transmit them to the mobile terminals.

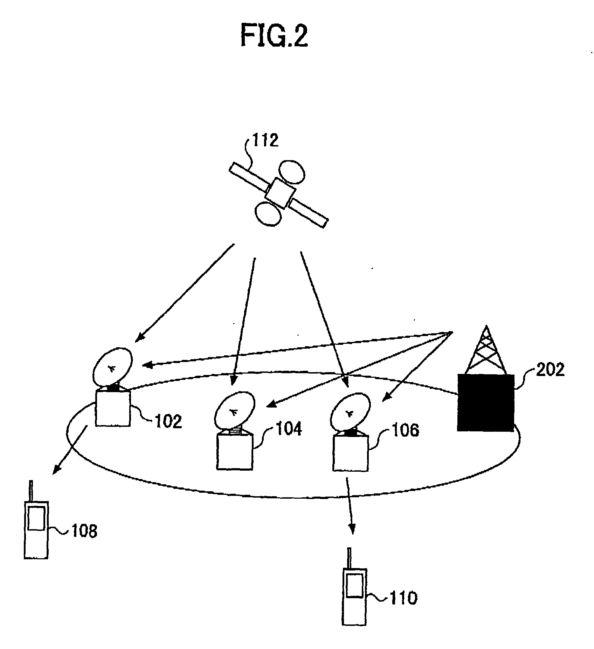

As shown in Fig. 2, the radio base stations 102, 104, 106 can receive ground wave radio signal from a ground wave transmission station 202, convert the radio signal and transmit them to the mobile terminals. The communication satellite 112 and the ground wave transmission station 202 are the same as each other in that they distribute information to the mobile terminals.

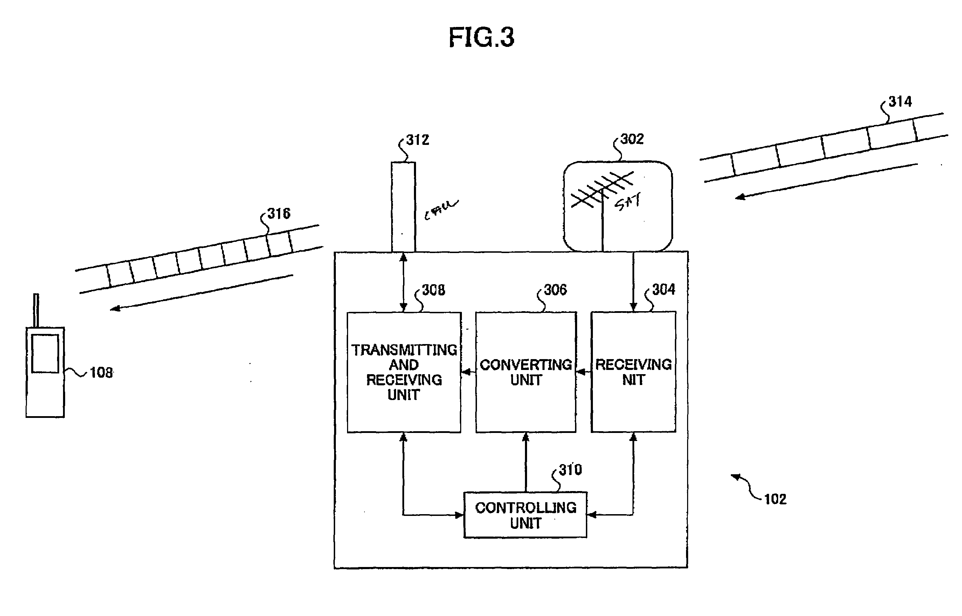

Fig. 3 shows in more detail a block diagram of the radio station 102 shown Figs. 1 and 2. The other radio stations 104, 106 have similar structures. The radio station 102 comprises an antenna for satellite communication 301, a receiving unit 304, a converting unit 306, a transmitting and receiving unit 308, an administration unit 310 and an antenna for cellular communication 312.

The antenna for satellite communication 302 receives radio signals from the communication satellite (112 shown in Fig. 1) or the ground wave transmission station (202 shown in Fig. 2). Accordingly, the radio base station 102 should be located at a suitable place for communicating with both mobile terminals and the communication satellite.

The receiving unit 304 analyzes a signal received at the antennal for satellite communication 302. The analysis result is given to the administration unit 310 and/or the converting unit 306.

In response to instructions by the administration unit 310, the converting unit 306 converts the signal obtained from the receiving unit 304 into an adequate signal format suitable for transmitting to the mobile terminal 108. In other words, the converting unit 306 adjusts between a radio format (signal format, bandwidth, etc.) for transmitting the signal 314 by the communication satellite and a radio format for transmitting the signal 316 by the mobile terminal 108. A latter radio format may be, for example, the W-CDMA (Wideband Code Divisional Multiple Access) system in the UMTS system (Universal Mobile Telecommunication System) for the third generation mobile communication system.

The transmitting and receiving unit 308 together with the antenna for cellular communication 312 performs signal transmission to the mobile terminal 108 and signal reception from the mobile terminal 108.

The administration unit 310 controls or administers distribution request from the mobile terminal 108. The distribution request includes information for identifying the mobile terminal, information for identifying contents to be distributed, etc. By performing this administration properly, it can be avoided to distribute not-required information.

Fig. 4 is a flowchart illustrating a procedure in the first embodiment of the present invention. At step 402, the mobile terminal 108 transmits a distribution request to the radio base station 102. The radio base station 102 supplies the distribution request received at the antenna for cellular communication 312 (shown in Fig. 3) to the administration unit 310 via the transmitting and receiving unit 308.

At step 404, based on the distribution request, the administration unit 310 revised a distribution table. The distribution table contains information indicating mobiles terminals belonging to the area covered by the radio base station, information indicating what information should be distributed to the covered area, etc.

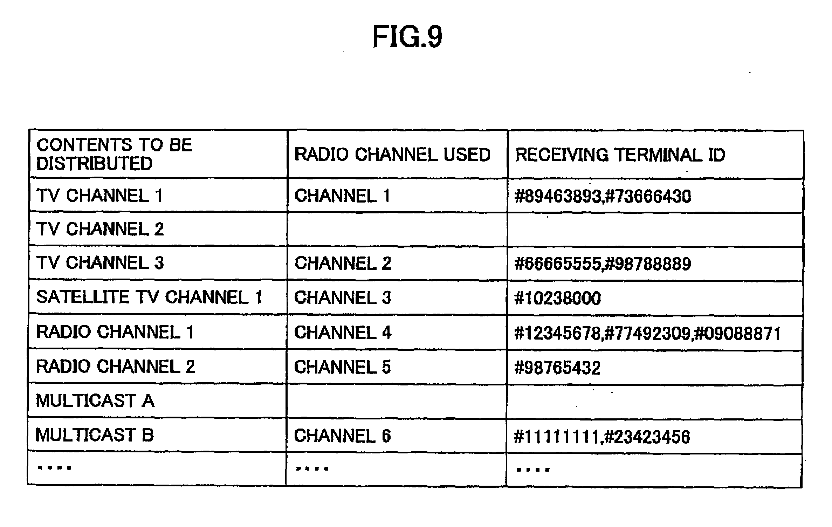

Fig. 9 is an example of the distribution table. The left column in the table in Fig. 9 shows contents to be distributed. The middle column in the table shows radio channels used for distributing contents to the mobile terminals. The right column in the table shows mobile terminals that requested contents distribution. For example, the second row in the table indicates that the contents broadcasted in TV channel 1 are requested to be distributed to two mobile terminals #89463893, #73666430 using radio channel 1. The third row indicates that no mobile terminal requests the contents broadcasted in TV channel 2. Contents to be distributed include not only TV broadcasted contents but also satellite TV broadcasted contents, radio broadcasted contents and specific contents directed to multicast groups, etc.

At steps 406, 408, distribution information such as TV broadcasting contents is transmitted to the radio base station 102 via the communication satellite 112. The distribution information is transmitted to the antenna for satellite communication 302 and the receiving unit 304 of the radio base station. In this embodiment, the distribution information is received via the communication satellite. The distribution information can, however, also be received via the ground wave transmission station 202 as shown in Fig. 2, as mentioned above.

At step 410, it is determined whether the distribution information received by the radio base station does coincide with requested information. In more detail, it is determined whether the contents of the table made or revised at step 404 coincide with the received distribution information. If it was determined that the contents of the table made or revised at step 404 do not coincide with the received distribution information, then further distribution is not needed and the procedure goes to step 412.

At step 412, the received distribution information is not further processed, the procedure ends. One example of this situation is where there is no mobile station requesting to distribute information as in TV channel 2 shown in Fig. 9. For example, the radio base station 104 shown in Fig. 1 has no mobile station belonging thereto, and therefore even if it receives distribution information from the communication satellite, it does not perform further processing on the received information. On the other hand, if it was determined that the contents of the table made or revised at step 404 coincide with the received distribution information, the distribution information needs to be further distributed and the procedure goes to step 414.

At step 414, the converting unit 306 converts the signal received from the receiving unit 304 into a signal format suitable for transmitting to the mobile terminal 108. Although it is also technically possible to convert signal formats before going to step 410, it is desired to convert signal formats after step 410 from the viewpoint of avoiding unnecessary signal format conversion.

At step 416, the converted signal is radio-transmitted to the mobile terminal 108 via the transmitting and receiving unit 308 and the antenna for cellular communication 310. Regarding the radio-transmission to mobile terminals, it is generally possible to utilize (a) an individual channel established for each mobile terminal, (b) an individual channel allocated for distributing the information, and (c) common channel common to plural mobile terminals. The channels (b) and (c) are advantageous in that there is no need to specify an individual terminal. In case of paid broadcasting, it is possible to send an encryption key only to a mobile terminal requesting information distribution, radio-transmit encrypted distribution information. And the mobile terminal can decrypt the encrypted distribution information. In this manner, it becomes possible to individually charge per mobile terminal.

According to this embodiment, mobile terminals without having satellite reception function can receive distribution information from a satellite. That is, existing cellular phones can receive information from a satellite even if they are not specially designed for satellite communication. This embodiment does not construct new satellite communication system, but adds distribution controlling function and signal converting function to radio base stations in an existing cellular communication system. Since mobile terminals only have to receive distribution information from the modified radio base stations, they do not need to be located in line of sight from a communication satellite. Since the mobile terminals receive the distribution information from the base stations, the base stations do not need to administer (create and revise) distribution trees, but only have to administer distribution requests. According to this embodiment, general broadcast contents such as TV broadcast contents and radio broadcast contents can be distributed to mobile terminals, and the radio base stations administer distribution requests from the mobile terminals, and therefore it becomes possible to easily realize multicast to unspecified many mobile terminals.

When a mobile terminal communicating with one (original) radio base station moves into a cell of a new radio base station and still wants to continuously receive distributed information, it is necessary to notify the new radio base station of the information regarding the distribution request. On the contrary, the original radio base station needs to stop distributing information. The notification to the new radio base station can be done by the mobile terminal itself or by the original radio base station when handing-over. If the new radio base station is already distributing the information that the moving mobile terminal wants to receive, the mobile terminal does not have to send a distribution request to the new radio base station but can receive the same distributed information. However it is desired for the mobile terminal to send a distribution request to the new radio base station to avoid unexpected stop distribution.

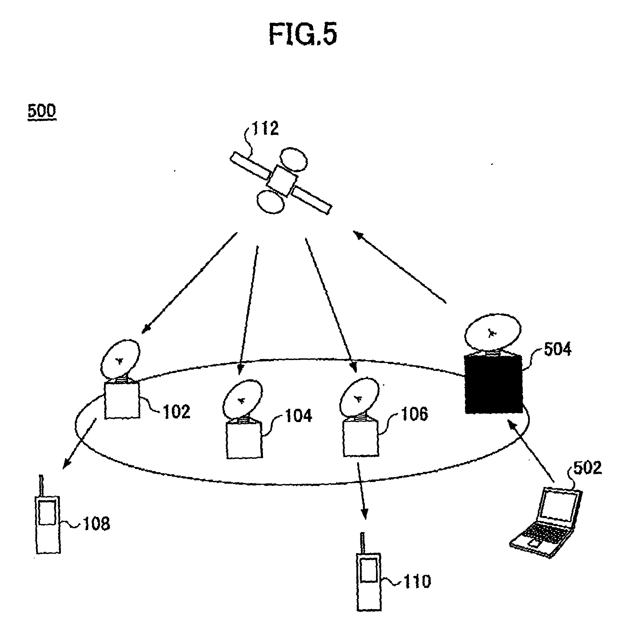

Fig. 5 generally shows an information distribution system 500 according to a second embodiment of the present invention. The information distribution system 500 comprises a plurality of radio base stations 102, 104 and 106 provided in a service area and mobile terminals 108 and 110, and a communication satellite 112. The information distribution system 500 further comprises an information transmission terminal 502 and a transmission station for satellite communication 504.

The communication satellite (or broadcasting satellite) 112 receives distributed information from a ground transmission station (not shown) and transmits it into the service area. The mobile terminals 108, 110 are devices that finally receive the distributed information. The mobile terminals may be cellular phones, mobile communication terminal, communicable personal computers and any other communicable terminals. The radio base stations 102, 104, 106 are provided within cells of the communication system respectively, and communicate with the mobile terminals 108, 110. These radio base stations have functions as cellular system base stations establishing service areas in plural cells. The radio base stations 102, 104, 106 in this embodiment can further receive radio signal from the communication satellite 112, convert the signal and transmit them to the mobile terminals.

The information transmission terminal 502 has information that will be distributed to the mobile terminals finally. Although this information transmission terminal 502 has no function to broadcast signals to the radio base station 102, 104, 106 and the communication satellite 112, it can communicate with the transmission station for satellite communication 504 by radio or line. Accordingly, the information transmission terminal 502 represents service providers other than general broadcasting service providers such as TV broadcasting services or radio broadcasting services. The contents to be distributed from the information transmission terminal 502 may include video images, still images, audio, texts, control signals and others, similar to general broadcasting services.

The transmission station for satellite communication 504 is a ground station that receives signals from the information transmission terminal 502 and transmits them to the communication satellite 112. The distributed information from the information transmission terminal 502 can be transmitted using a variety of radio systems such as GSM (Global System for Mobile Communication) system, PDC (Personal Digital Cellular) system, W-CDMA system of UMTS. The distributed information from the information transmission terminal 502 can be transmitted to the transmission station for satellite communication 504 via lined network.

According to this embodiment, the transmission station for satellite communication 504 transmits the distributed information to the communication satellite 112, and therefore service providers themselves do not have to transmit distributed information to the communication satellite 112. Therefore, the workloads on the service provider side can be reduced.

The communication satellite 112 receives the distributed information from the transmission station for satellite communication 504, and forwards the distributed information to the ground. When the communication satellite 112 has a plurality of beams covering a wide distribution area, the communication satellite 112 can select a necessary beam to distribute the information to necessary area only. Services where distributed information is limited may include traffic jam informing service, transportation informing service, weather informing service, local advertisement service, etc. In order to limit distribution area, information for limiting area (distribution area information) can be added to distributed information, or the communication satellite can be previously set for its distribution area. Be properly narrowing or broadening the distribution area, it becomes possible to distribute the information adequately resulting in effective use of radio resources.

In this embodiment also, similar to the first embodiment, the radio base stations transmits distributed information to mobile stations belonging thereto. In this situation, it is generally possible to utilize (a) an individual channel established for each mobile terminal, (b) an individual channel allocated for distributing the information, and (c) common channel common to plural mobile terminals. If an individual channel is assigned to each mobile terminal respectively, it becomes possible to maintain adequate signal quality depending on each terminal's reception condition. If the same channel is assigned to plural mobile terminals, it becomes possible to improve the utilization efficiency of radio resources at the risk of the signal quality of each mobile terminal (for example, the signal quality is good for mobile terminals close to the radio base station, but it is not good for mobile terminals far away). In the latter case, the mobile terminals may receive signal containing errors, which the next embodiment can solve.

### [Third Embodiment]

In the above embodiment, it is assumed that the distributed information received by the radio base stations or the mobile terminals has no error or tolerable errors if any. In information distribution services like real time audio/visual streaming services, some errors are tolerable and acceptable. However, in some other sensible applications such as data communication or file transfer in accordance with TCP, data error may significantly degrade service quality. In such applications, if received information has an error, it is desired to re-send the information to maintain service quality. The following embodiment relates to such re-sending information

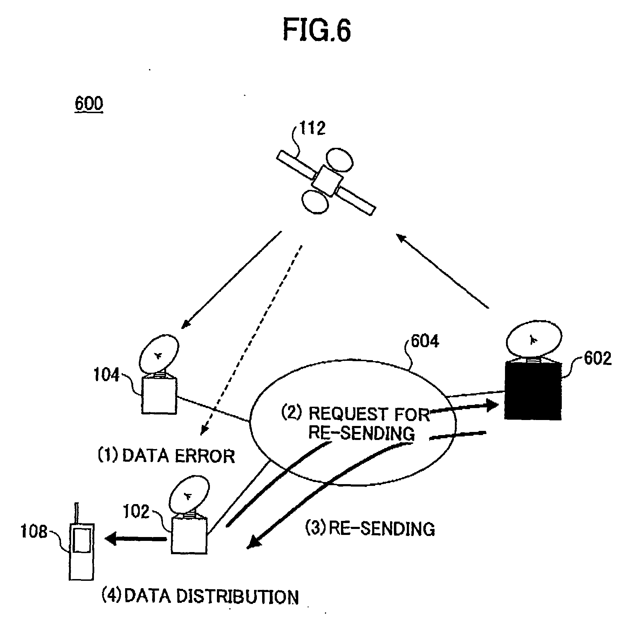

Fig. 6 generally shows an information distribution system 600 according to third embodiment of the present invention. Elements shown in Fig. 6 are basically the same as those shown in Fig. 5, except a transmission station 602. In this embodiment, the transmission station 602 may be a general broadcasting service station for transmitting information to the communication satellite 112, or may be a satellite communication for satellite communication that receives distributed information from an information transmission terminal (not shown) and transmits it to the communication satellite 112. Further, the transmission station 602 is capable of individually communicating with each of the radio base stations 102, 104 through a network 604.

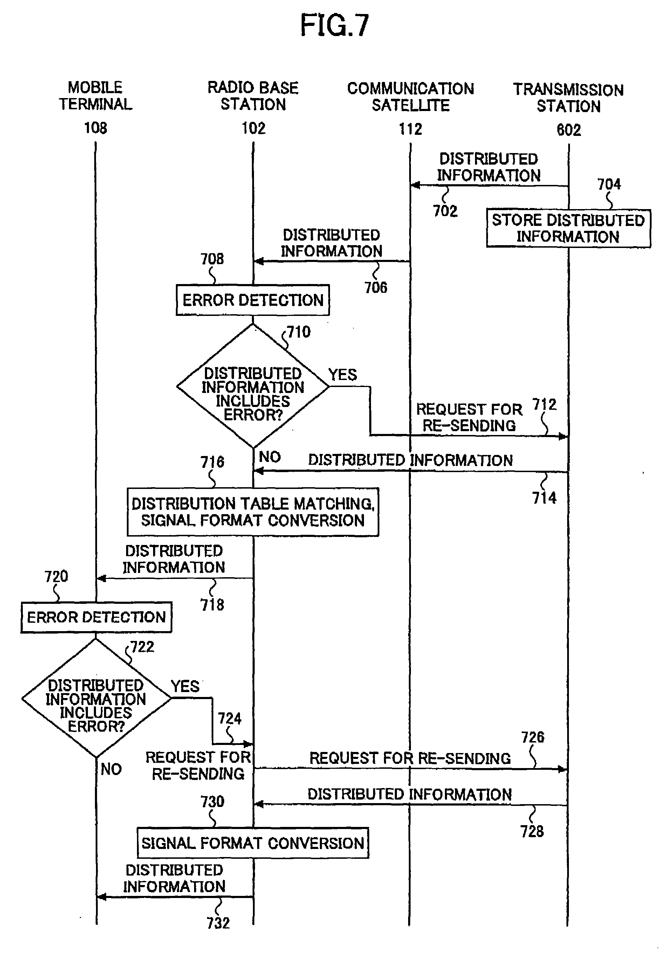

Fig. 7 is a flowchart illustrating a procedure in this embodiment. The transmission station 602 (shown in Fig. 6) creates or received information to be distributed. At step 702, the transmission station 602 transmits the distributed information to the communication satellite 112.

At step 704, the information distributed to the communication satellite is stored in a storage unit (not shown). Although the information distributed to the communication satellite is stored after the transmission in this figure, it can be stored before the transmission.

At step 706, the communication satellite 112 transmits the distributed information to the radio base stations 102, 104 (shown in Fig. 6).

As shown at step 708, the radio base station performs signal processing for detecting an error on signals received thereby. This signal processing is performed by applying a predetermined operation on redundant codes included in the received signals.

At step 710, it is determined whether the received information includes an error or not. In the example shown in Fig. 6, it is assumed that signals received by the radio base station 104 have no error, and signals received by the radio base station 102 has an error (These situations are represented by a solid line or a dotted line directed from the communication satellite 112 to each radio base station.)

As shown at step 712, if an error is included, the radio base station (102) makes a request to the transmission station 602 for re-sending. The request for re-sending is transmitted to the transmission station 602 via the net work 604. The request for re-sending includes at least information identifying radio base stations, information indicating distributed information with error (for example packet number), etc.

As shown in Step 714, the transmission station 602 that received the re-sending request extracts the information designated by the re-sending request from the stored information (step 704), re-sends the extracted information to the radio base station 102 via the network 604 (not to the radio base station 104).

As shown in step 716, the radio base station 102 performs processing relating to distribution table matching and signal format conversion similar to the procedure explained above with reference to Fig. 4.

At step 718, a converted signal is transmitted to the mobile terminal 108.

In this manner, the transmission station 602 re-sends the information to the requesting radio base stations individually, and therefore unnecessary re-sending can be avoided.

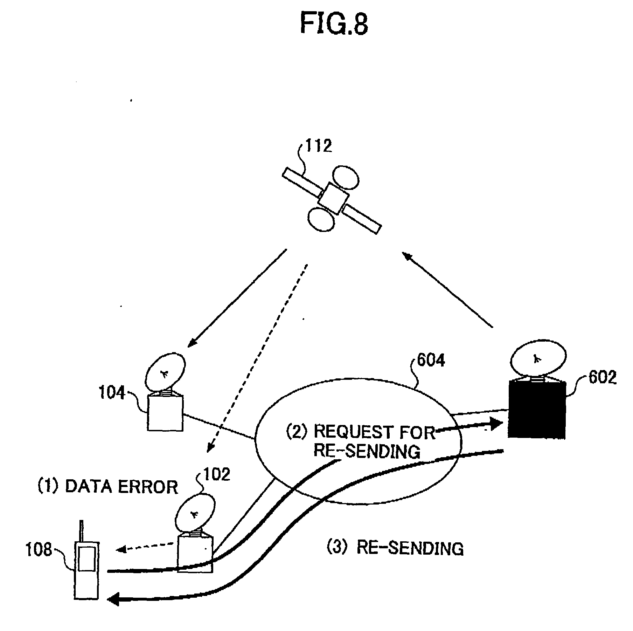

The error detection and request for re-sending can be carried out by the mobile terminal 108 instead of or in addition to the radio base station 102. A procedure and diagram in a case where the mobile terminal 108 performs error detection, etc. are illustrated at steps 720 - 732 and Fig. 8, respectively.

At step 720, the mobile terminal 102 performs error detection signal processing on received signals. This signal processing can be done by applying a predetermined operation on redundant codes included in the received signals.

At step 722, it is determined whether the received signals (distributed information) include an error.

As shown in steps 724, 726, if an error is included, a request for re-sending is transmitted to the transmission station 602 via the radio base station 102 to which the mobile terminal 108 belongs. The request for re-sending is transmitted via the network 604.

As shown in step 728, the transmission station 602 that received the re-sending request extracts the information designated by the re-sending request from the stored information (step 704), re-sends the extracted information to the radio base station 102 via the network 604 (not to the radio base station 104).

As shown in step 730, the radio base station 102 performs processing relating to distribution table matching and signal format conversion.

In this manner, if the mobile terminal performs the error detection, an error generated during transmission from the radio base station to the mobile terminal can also be detected.

In this embodiment, both the radio base station and the mobile terminal perform error detection. An error generated during transmission from the communication satellite to the radio base station is detected by the radio base station, an error generated during transmission from the radio base station to the mobile terminal is detected by the mobile terminal, and therefore workloads for error detection can be divided. By liming error in this manner, it becomes possible to improve service quality and simplify mobile terminals.

## Claims

1. An information distribution system (100) for distributing information to a mobile terminal (108) via a radio base station (102), **characterized in that** the radio base station (102) comprises:
a receiving unit (304) for receiving a radio signal including the distributed information from a communication satellite (112) or a ground wave transmission station (202);
a converting unit (306) for converting a signal format of the received radio signal;
an administration unit (310) for administering a distribution request received from the mobile terminal; and
a transmitting unit (308) for transmitting the converted signal to the mobile terminal according to an instruction from the administration unit.

2. An information distribution system (100) for distributing information to a mobile terminal (108) via a radio base station (102), **characterized in that** the radio base station (102) comprises:
a receiving unit (304) for receiving a radio signal including the distributed information from a communication satellite (112);
a converting unit (306) for converting a signal format of the received radio signal;
an administration unit (310) for administering a distribution request received from the mobile terminal; and
a transmitting unit (308) for transmitting the converted signal to the mobile terminal according to an instruction from the administration unit; and
the information distribution system comprises a transmission station for satellite communication (504) for receiving information from an information terminal (110) and transmitting the information to the communication satellite (112).

3. The information distribution system as claimed in claim 2, **characterized in that**
the transmission station for satellite communication (602) is capable of communicating with each of a plurality of radio base stations via a network (604) excluding the communication satellite (112); and
the radio base stations comprise
a detecting unit for detecting an error included the received signal from the communication satellite; and
a requesting unit for requesting the transmission station for satellite communication (504) to re-send the information.

4. The information distribution system as claimed in claim 2, **characterized in that**
the transmission station for satellite communication (602) is capable of communicating with each of a plurality of radio base stations via a network (604) excluding the communication satellite (112); and
the mobile terminal (108) comprises
a detecting unit for detecting an error included the received signal from the radio base stations; and
a requesting unit for requesting the transmission station for satellite communication (504) via the radio base station to re-send the information.

5. A radio base station (102) comprising:
a receiving unit (304) for receiving a radio signal including the distributed information from a communication satellite (112) or a ground wave transmission station (202);
a converting unit (306) for converting a signal format of the received radio signal;
an administration unit (310) for administering a distribution request received from the mobile terminal; and
a transmitting unit (308) for transmitting the converted signal to the mobile terminal according to an instruction from the administration unit.

6. A radio base station (102) comprising:
a receiving unit (304) for receiving a radio signal including the distributed information from a communication satellite (112);
a converting unit (306) for converting a signal format of the received radio signal;
an administration unit (310) for administering a distribution request received from the mobile terminal; and
a transmitting unit (308) for transmitting the converted signal to the mobile terminal according to an instruction from the administration unit; and
the distributed information is distributed from a ground transmission station for satellite communication (504) to the communication satellite (112).

7. The radio base station as claimed in claim 6, **characterized in that**
the transmission station for satellite communication (602) is capable of communicating with each of a plurality of radio base stations via a network (604) excluding the communication satellite (112); and
the radio base station (102) comprises
a,detecting unit for detecting an error included the received signal from the communication satellite; and
a requesting unit for requesting the transmission station for satellite communication (504) to re-send the information.

8. An information distribution method (Fig. 4) for distributing information to a mobile terminal (108) via a radio base station (102), **characterized by** the steps of:
a step of receiving a distribution request from the mobile terminal (108);
a step of receiving a radio signal including the distributed information from a communication satellite (112) or a ground wave transmission station (202);
a step of comparing the distributed information with contents of the distribution request;
a step of converting a signal format of the received radio signal depending on the comparison result; and
a step of transmitting the converted signal to the mobile terminal according to the distribution request.

9. An information distribution method (Fig. 4) for distributing information to a mobile terminal (108) via a radio base station (102), **characterized by** the steps of:
a step of receiving a distribution request from the mobile terminal (108);
a step of transmitting a signal including the distributed information from a transmission station for satellite communication (504) to a communication satellite (112);
a step of receiving the signal from the communication satellite (112);
a step of comparing the distributed information with contents of the distribution request;
a step of converting a signal format of the received radio signal depending on the comparison result; and
a step of transmitting the converted signal to the mobile terminal according to the distribution request.

10. The information distribution method as claimed in claim 9, **characterized in that**
the transmission station for satellite communication (602) is capable of communicating with each of a plurality of radio base stations via a network (604) excluding the communication satellite (112); and
the method further comprises
a step of detecting an error included the received signal from the communication satellite; and
a step of requesting the transmission station for satellite communication (504) to re-send the information.
